# EUROPÄISCHE PATENTSCHRIFT

(11) **EP 1 515 573 B1**
(45) Veröffentlichungstag und Bekanntmachung des Hinweises auf die Patenterteilung: **30.03.2011**
(21) Anmeldenummer: 04021328.2
(22) Anmeldetag: 08.09.2004
(51) Int. Cl.: H04W 24/00

(54) **Einrichtung zum Überprüfen einer SIM-Karte**
Apparatus for checking a SIM card
Appareil pour tester une carte SIM

(30) Priorität: 10.09.2003 DE 10342112
(43) Veröffentlichungstag der Anmeldung: 16.03.2005
(73) Patentinhaber: Vodafone Holding GmbH, 40213 Düsseldorf (DE)
(72) Erfinder: Müller, Frank, 40237 Düsseldorf (DE); Trapp, Harald, 42489 Wülfrath (DE)
(74) Vertreter: Weisse, Renate

(56) Entgegenhaltungen:
- EP-A- 0 993 209
- EP-A1- 0 562 890
- WO-A-01/39464
- WO-A-98/58510
- GB-A- 2 378 852
- US-A1- 2002 069 259

## Beschreibung

### Technisches Gebiet

Einrichtung zum Überprüfen einer SIM-Karte, enthaltend einen SIM-Karten-Leser welcher die Daten der SIM-Karte ausliest, Prüfmittel, zum Überprüfen des technischen Status der SIM-Karte wobei die Prüfmittel in einem Analyserentium angeordnet sind, der SIM-Karten-Leser und die Prüfmittel jeweils eine Netzwerkanbindung zu einem gemeinsamen Netzwerk aufweisen, über welches die Daten bzgl. des Status der SIM-Kartevom SIM-Karten-Leser zu den Prüfmitteln übertragen werden und die SIM-kerte (28) sich dabei immer passiv verhält und nur auf Initiative oder ein kommando des Analysezentrums reagiest, wobei die kommunikation zwischen SIM- Karte und dem Analysezentrum mittels APDU erfolgt.

### Stand der Technik

SIM-Karten (=Subscriber Identification Modul) sind "kleine" Chipkarten, die beispielsweise in Mobilfunkendgeräte eingesetzt werden, um sich eindeutig im Mobilfunknetz identifizieren zu können. Gelegentlich können solche SIM-Karten einen Defekt aufweisen. Um festzustellen, ob bei einer SIM-Karte einen solcher Defekt vorliegt, muss die SIM-Karte in ein spezielles Prüfgerät eingesetzt werden. Solche Prüfgeräte bestehen derzeit aus einem SIM-Karten-Leser, der als Peripheriegerät mit einem PC (=Personal Computer) verbunden ist. Die vermeintlich defekte SIM-Karte wird nun beispielsweise dem Mobilfunkendgerät entnommen und in das Prüfgerät eingesetzt. Wenn der Chip der SIM-Karte nicht mechanisch beschädigt oder sogar zerstört ist, können die zur Überprüfung erforderlichen Daten ausgelesen werden. Die ausgelesenen Daten werden zur Analyse von dem SIM-Karten-Leser an den PC übertragen. Dort können die Daten der SIM-Karte ggf. unmittelbar ausgewertet werden, sofern hierfür die geeigneten Programme vorhanden sind. Eine Analyse, bei der ein PC unmittelbar die Daten der SIM-Karte auswertet, hat zur Folge, dass jeder einzelne PC gepflegt bzw. gewartet werden muss, um die aktuellsten Analyseprogramme vorliegen zu haben. Diese Einrichtungen sind damit arbeits- und kostenintensiv. Bei steigenden Anforderungen an die SIM-Karte wachsen auch deren technischen Möglichkeiten. Dies führt mitunter zu SIM-Karten mit unterschiedlichen Chips. Lediglich die Schnittstelle zum SIM-Karten-Leser bleibt derzeit aus Gründen der Kompatibilität gleich.

Für diejenigen, deren SIM-Karte einen möglichen Defekt aufweist, bestehen derzeit die Möglichkeiten, entweder die SIM-Karte zur Reparatur einzuschicken, sich ein eigenes Prüfgerät zuzulegen oder in ein Geschäft zu gehen, wo solche geeigneten Prüfgeräte vorhanden sind. Für den Anwender ist dieses äußerst umständlich. Bekannte Einrichtungen zum Prüfen von SIM-Karten sind daher benutzerunfreundlich.

*Die* GB 2 378 852 A *beschreibt eine Methode, Fehler eines Mobilfunkgerätes oder der eingefügten SIM-Karte zu protokollieren und über das GSM-Netz an ein Kontrollzentrum zu übermitteln. Dabei identifiziert eine Diagnosefunktion des Mobilfunkgerätes Fehler, speichert diese ab und leitet sie an das SAT (Sim Application Tool) der Sim-Karte weiter. Das SAT sendet daraufhin eine Warnmeldung, beispielsweise als SMS, über das Mobilfunknetz (GSM, UMTS) an ein Kontrollzentrum (DLCC) weiter. Das Kontrollzentrum besitzt eine Analyseeinheit, die diese Fehlermeldungen diagnostiziert und aufbereitet. Anschließend werden Korrekturen, beispielsweise über neue Updates an das SAT des Mobilfunkgerätes geschickt.*

*Die Druckschrift WO 01*/39464 A1 offenbart eine Chipkarte, die nach ihrer Herstellung und Verteilung angepasst werden kann. Dabei kommuniziert die Chipkarte mit externen Vorrichtungen, beispielsweise mit einem Mobiltelefon, über eine Schnittstelle, die als API (Application Protocol Interface) bezeichnet wird. Die Befehlsübertragung erfolgt durch das APDU (Application Packet Data Unit). Die empfangenen ADPU-Befehle werden von einem sog. ADPU-Handler, der sich auf dem ROM der Chipkarte befindet empfangen und analysiert.

Die Standardisierung von APDU-Befehlen ist oft ein Prozess, der langsamer abläuft, als die technische Entwicklung der Chipkarten, so dass neue Funktionalitäten nur langsam verbreitet werden. Die Druckschrift bietet daher ein Verfahren an, mit welchem eine externe Vorrichtung auf Funktionalitäten der Chipkarte zugreifen kann, für welche die APDU erst nach der Herstellung der Chipkarte standardisiert worden ist. Das Ziel wird dadurch erreicht, dass der ADPU-Handler in der Chipkarte, welcher die Reaktionen auf ankommende Daten bestimmt, zu jedem Zeitpunkt geändert werden kann, um neudefinierte APDU-Befehle zu berücksichtigen.

*Die* US 2002 00690259 A1 *beschreibt ein Verfahren, netzwerkfähige Einrichtungen, wie etwa Mobilfunkgeräte, über ein drahtloses Kommunikationssystem, zu managen, zu kontrollieren und ggf. neu zu konfigurieren. Dabei nimmt ein Server über das Mobilfunknetz Kontakt zu dem Mobilfunkgerät auf und übermittelt die entsprechenden Daten. Das Mobilfunkgerät führt die übermittelten Anweisungen dann aus.*

*Die* EP 0 993 209 A2 *offenbart ein Gerät, das in der Lage ist, die Funktionalität von SIM-Karten zu untersuchen. Der Kunde hat dabei die Möglichkeit sein Mobilfunkendgerät an eine solche Testvorrichtung, die als Terminal oder Konsole ausgebildet sein kann, anzudocken und untersuchen zu lassen. Eine Druckeinrichtung druckt die Testergebnisse dann aus.*

### Offenbarung der Erfindung

Aufgabe der Erfindung ist es daher, eine Einrichtung zum Überprüfen einer SIM-Karte zu schaffen, die die genannten Nachteile des Standes der Technik beseitigt und die möglichst Kosten sparend und benutzerfreundlich ausgebildet ist.

Erfindungsgemäß wird die Aufgabe durch die Merkmale des Anspruchs 1 gelöst.

SIM-Karten-Leser und Prüfmittel zum Überprüfen der SIM-Karten müssen nunmehr nicht mehr an einem Ort vorliegen. Die erforderlichen Daten zum Überprüfen der SIM-Karte werden über ein Netzwerk an ein Prüfgerät übermittelt. Der Anwender, der eine defekte SIM-Karte vermutet, kann mit einem einfachen SIM-Karten-Leser, der über ein Netzwerk mit den Prüfmitteln verbunden ist, kostengünstig und einfach seine SIM-Karte überprüfen lassen. Die Prüfmittel, beispielsweise aus einem computergesteuerten Prüfgerät bestehend, können so erheblich einfacher aktuelle Software enthalten, als es bei dezentralen angeordneten Einrichtungen, welche nicht über eine Netzwerkanbindung verfügen, der Fall ist. Die Software lässt sich leichter pflegen und warten.

In einer vorteilhaften Ausgestaltung der erfindungsgemäßen Einrichtung weisen die Prüfmittel einen Analysator auf, der die Daten der SIM-Karte analysiert. Durch diese Maßnahme können schnell Fehler der SIM-Karte über das Netzwerk analysiert werden. Somit können nicht nur Fehler durch die Prüfmittel festgestellt, sondern auch analysiert werden und ggf. Reparaturvorschläge bzw. eine Reparatur unmittelbar vorgenommen werden.

In einer weiteren vorteilhaften Ausbildung der Erfindung ist das Netzwerk als Funknetz, insbesondere Mobilfunknetz, ausgebildet ist. Das Funknetz bietet den Vorteil, dass die Überprüfung kein herkömmliches Festnetz benötigt, sondern der Austausch der erforderlichen Daten über Funk erfolgen kann.

Eine bevorzugte Ausgestaltung der Erfindung ergibt sich, wenn die Prüfmittel in einer zentralen Rechnereinheit vorgesehen sind. Die Rechnereinheit ist beispielsweise in einem zentralen Analysezentrum vorgesehen. Die Daten der SIM-Karte werden dann an das Analysezentrum übertragen, welches eine Auswertung der SIM-Karten-Daten liefert. Der Vorteil der Analyse der Daten durch das Analysezentrum liegt darin, das immer zentral die aktuellsten Analyseprogramme verwendet werden können, die sich auf alle Gegebenheiten der SIM-Karte einstellen lassen. Um sich insbesondere auf die verschiedenartigen SIM-Karten einstellen zu können, erweist es sich als vorteilhaft, dass die Prüfmittel mit einer Datenbank verknüpft sind, in der Daten, welche die zu überprüfende SIM-Karte betreffen, gespeichert sind. Dadurch können die Fehlerquellen leichter auf dem Chip lokalisiert, analysiert und, falls möglich, auch beseitigt werden.

Eine bevorzugte Ausgestaltung der Erfindung besteht darin, dass der SIM-Karten-Leser in einem Mobilfunkendgerät mindestens teilweise integriert ist. Üblicherweise verfügen Mobilfunkendgeräte nämlich über SIM-Karten-Leser, weil mit Hilfe der SIM-Karte die Einbuchung des Mobilfunkendgeräts erfolgt. Die Daten zum Einbuchen in ein Mobilfunknetz werden dazu aus der SIM-Karte ausgelesen und mit dem Mobilfunkendgerät über das Mobilfunknetz an den Betreiber dieses Netzes übermittelt. Der Betreiber kann die Berechtigung feststellen und eine Kommunikation zulassen oder abweisen. Der SIM-Karten-Leser heißt zwar "Leser", er dient aber auch dazu, Daten in den Chip der SIM-Karte zu schreiben. Dieser SIM-Karten-Leser muss nur dazu veranlasst werden, die SIM-Karte in geeigneter Weise auf einen Defekt hin zu überprüfen.

Damit Unberechtigte nicht Zugriff auf den Status einer SIM-Karte haben, sind vorzugsweise Mittel zum Verschlüsseln der Daten bzgl. des Status der SIM-Karte vorgesehen. Entsprechend erweist es sich als vorteilhafte Ausbildung der erfindungsgemäßen Einrichtung, wenn Mittel zum Feststellen der Berechtigung vorgesehen sind, die nur Berechtigte auf die SIM-Karte zum Auslesen der Statusdaten zulassen.

**Kurze Beschreibung der Zeichnung**

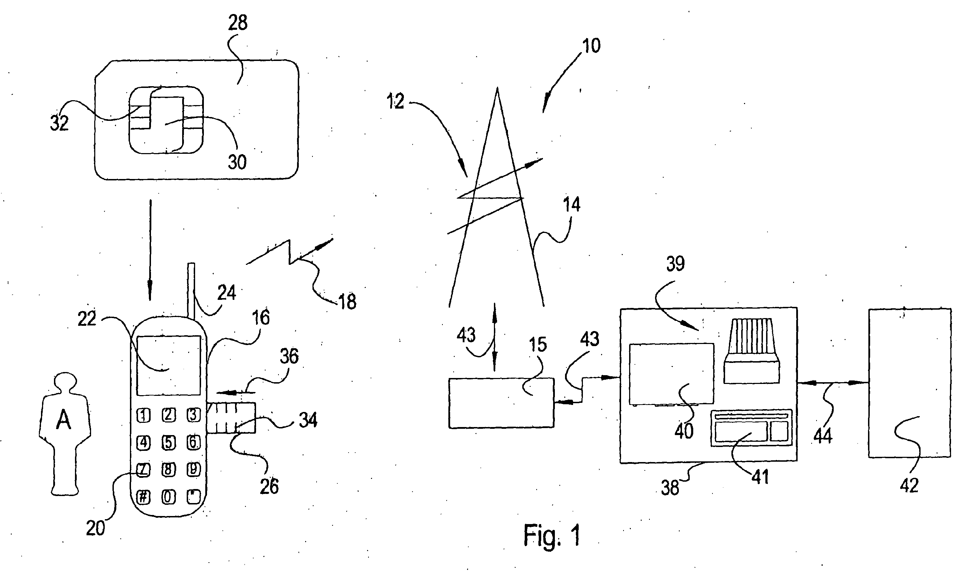

- Fig. 1: zeigt in einer schematischen Prinzipskizze eine erfindungsgemäße Einrichtung.

### Bevorzugtes Ausführungsbeispiel

In Fig. 1 wird eine schematische Prinzipskizze einer erfindungsgemäßen Einrichtung 10 mit einem Mobilfunknetz 12 dargestellt. Das Mobilfunknetz 12 wird durch einen Funkmast 14 und eine Verwaltungs- und Vermittlungseinheit 15 symbolisiert. Die Verwaltungs- und Vermittlungseinheit 15 stellt die Kommunikationverbindung her. Die Kommunikation eines Teilnehmers "A" mit einem Mobilfunkendgerät 16 über das Mobilfunknetz 12 wird durch Pfeil 18 angedeutet. Das Mobilfunkendgerät 16 weist neben einem Bedienungsfeld 20 eine Anzeige 22 auf. Eine nicht sichtbare Sende- und Empfangseinrichtung nimmt über die Mobilfunkantenne 24 zu dem Mobilfunknetz 12 Kontakt auf. Das Mobilfunknetz 12 arbeitet beispielsweise nach dem GSM- oder UMTS-Standard (GSM= Global System for Mobile Communication / UMTS= Universal Mobile Telecommunication System). Diese Mobilfunknetz-Standards sind in zahlreicher Literatur (z.B. GSM Global System for Mobile Communication 2. Auflage 1999, Eberspächer/Vögel im B.G. Teubner Verlag) ausführlich beschrieben und werden daher nicht näher erläutert. Diese Mobilfunknetze 12 bilden jedoch Netze im Sinne der vorliegenden Erfindung.

Das Mobilfunkendgerät 16 enthält einen SIM-Karten-Leser 26. In den SIM-Karten-Leser 26 kann eine SIM-Karte 28 eingelegt werden. Die SIM-Karte 28 ist in vorliegender Prinzipskizze vergrößert dargestellt und enthält einen Chip 30, in dem alle für die Teilnahme am Mobilfunknetz 12 relevanten Daten in einem Speicher gespeichert und mit dem SIM-Karten-Leser 26 auslesbar sind. Der Chip 30 weist nach außen hin Goldkontakte 32 auf. Mit entsprechenden Kontakten 34 des SIM-Karten-Lesers 26 kann so auf den Chip 30 zugegriffen werden, sofern die SIM-Karte 28 in den SIM-Karten-Leser 28 eingelegt ist. Der SIM-Karten-Leser 26 wird mit der SIM-Karte 30 zur Verwendung des Mobilfunkendgeräts 16 in einen nicht sichtbaren Schacht des Mobilfunkendgeräts 16 eingeschoben, was mit Pfeil 36 angedeutet wird.

Wenn festgestellt wird, dass eine SIM-Karte 28 nicht ordnungsgemäß funktioniert, kann sie in den SIM-Karten-Leser 26 des Mobilfunkendgeräts 16 eingelegt werden, sofern sie sich nicht bereits dort schon für den üblichen Betrieb befindet. Ein Analysezentrum 38, welches Prüfmittel 39 mit einer zentralen Rechner- 40 und Analyseeinheit 41 aufweist, kann über das Mobilfunknetz 12 sowie den SIM-Karten-Leser 28 des Mobilfunkendgeräts 16 auf die SIM-Karte 28 zum Datenaustausch zugreifen. Pfeile 43 deuten den bidirektionalen Datenaustausch und die Weiterleitung von Informationen an.

Der Zugriff erfolgt mittels APDU (=Application Protocol Data Unit). APDUs stellen einen universellen Datencontainer für jede Form der Kommunikation zwischen der SIM-Karte 28 und einem Terminal dar. Bei dem Terminal handelt es sich im vorliegenden Ausführungsbeispiel um das Analysezentrum 38. Es wird dabei zwischen Kommando-APDU zum Senden eines Befehls an den Chip der SIM-Karte 28 und der Response-APDU unterschieden, welche die Antwort aufnimmt. Dabei verhält sich die SIM-Karte 28 immer passiv, d.h., sie reagiert nur auf Initiative oder das Kommando des Analysezentrums 38.

Das Analysezentrum 38 hat ferner Zugriff auf eine Datenbank 42, was mit Pfeil 44 angedeutet wird. Mit Hilfe der Datenbank 42 können die Daten von verschiedenen SIM-Karten 28 abgeglichen werden, um mögliche Defekte zu ermitteln. Falls ein programmbedingter Fehler auf dem Chip 30 der SIM-Karte 28 vorliegt, kann dieser ggf. durch das Analysezentrum 38 nicht nur erfasst und analysiert sondern auch unmittelbar behoben werden. Das Analysezentrum 38 erhält zunächst über den SIM-Karten-Leser 26 und über das Mobilfunknetz 12 den Status der SIM-Karte 28. Die Statusdaten der SIM-Karte 28 liegen auf dem Chip 30 in verschlüsselter Form vor. Dies verhindert, dass Unberechtigte ohne weiteres auf die SIM-Karte 28 zugreifen können. Um auf die SIM-Karte 28 als Berechtigter zugreifen zu können und, um die Daten zu entschlüsseln, muss sich das Analysezentrum 38 als Zugriffsberechtigter zu erkennen geben.

## Patentansprüche

1. Einrichtung (10) zum Überprüfen einer SIM-Karte (28), enthaltend einen SIM-Kartenleser (26), welcher die Daten der SIM-Karte (28) ausliest, Prüfmittel (39) zum Überprüfen des technischen Status der SIM-Karte (28), wobei die Prüfmittel (39) in einem Analysezentrum (38) angeordnet sind,der SIM-Kartenleser (26) und die Prüfmittel (39) jeweils eine Netzwerkanbindung (18, 43) zu einem gemeinsamen Netzwerk (12) aufweisen, über welches Daten bzgl. des Status der SIM-Karte (28) vom SIM-kartenleser zu den Prüfmitteln (39) übertragen werden,
und die SIM-Karte (28) sich dabei immer passiv verhält und nur auf Initiative oder ein Kommando des Analysezentrums (38) reagiert,
**dadurch gekennzeichnet, dass** die kommunikation zwischen SIM-karte und dem Analysezentrum mittels APDU erfolgt. Ansprunch 2-8 wie ursprünglich eingereicht.

2. Einrichtung (10) zum Überprüfen einer SIM-Karte (28) nach Anspruch 1, wobei die Prüfmittel (39) einen Analysator (41) aufweisen, der die Daten der SIM-Karte (28) analysiert.

3. Einrichtung (10) zum Überprüfen einer SIM-Karte (28) nach Anspruch 1 oder 2, wobei das Netzwerk als Funknetz, insbesondere Mobilfunknetz (12), ausgebildet ist.

4. Einrichtung (10) zum Überprüfen einer SIM-Karte (28) nach einem der Ansprüche 1 bis 3, wobei die Prüfmittel (39) eine zentrale Rechnereinheit (40) enthalten.

5. Einrichtung (10) zur Überprüfung einer SIM-Karte (28) nach einem der Ansprüche 1 bis 4, wobei die Prüfmittel (39) mit einer Datenbank (42) verknüpft sind, in der Daten, welche die zu überprüfende SIM-Karte (28) betreffen, gespeichert sind.

6. Einrichtung (10) zur Überprüfung einer SIM-Karte (28) nach einem der Ansprüche 1 bis 4, wobei der SIM-Karten-Leser (26) mindestens teilweise in einem Mobilfunkendgerät (16) integriert ist.

7. Einrichtung (10) zur Überprüfung einer SIM-Karte (28) nach einem der Ansprüche 1 bis 6, wobei Mittel zum Verschlüsseln der Daten bzgl. des Status der SIM-Karte (28) vorgesehen sind.

8. Einrichtung (10) zur Überprüfung einer SIM-Karte (28) nach einem der Ansprüche 1 bis 7, wobei Mittel zum Feststellen der Berechtigung vorgesehen sind, die nur Berechtigte auf die SIM-Karte (28) zum Auslesen der Statusdaten zulassen.

## Claims

1. Device (10) for testing a SIM card (28) comprising a SIM card reader (26) reading the data of the SIM card (28), testing means (39) for testing the technical status of the SIM card (28), wherein the testing means (39) are placed in an analysis centre (38), the SIM card reader (26) and the testing means (39) each are provided with a network connection (18, 43) to a common network (12) via which data concerning the status of the SIM card (28) is transmitted from the SIM card reader to the testing means (39) and wherein the SIM card (28) always remains passive and only responds on initiative of or on a command from the analysis centre (38), **characterised in that** the communication between the SIM card and the analysis centre is carried out by means of APDU.

2. Device (10) for testing a SIM card (28) according to claim 1, wherein the testing means (39) comprise an analyser (41) analysing the data of the SIM card (28).

3. Device (10) for testing a SIM card (28) according to claim 1 or 2, wherein the network is designed as a radio network, in particular a mobile radio network (12).

4. Device (10) for testing a SIM card (28) according to any of claims 1 to 3, wherein the testing means (39) comprise a central processing unit (40).

5. Device (10) for testing a SIM card (28) according to any of claims 1 to 4, wherein the testing means (39) are connected to a data base (42) in which data concerning the SIM card (28) to be tested are stored.

6. Device (10) for testing a SIM card (28) according to any of claims 1 to 4, wherein the SIM card reader (26) is at least partially integrated into a mobile terminal (16).

7. Device (10) for testing a SIM card (28) according to any of claims 1 to 6, wherein means for encrypting the data concerning the status of the SIM card (28) are provided.

8. Device (10) for testing a SIM card (28) according to any of claims 1 to 7, wherein means for determining the authorisation are provided allowing only authorised persons of the SIM car d (28) to read the status data.

## Revendications

1. Dispositif (10) de vérification de carte SIM (28), comprenant un lecteur de carte SIM (26) effectuant la lecture des données figurant sur la carte SIM (28), des moyens de vérification (39) du statut technique de la carte SIM (28), les moyens de vérification (39) étant disposés dans un centre d'analyse (38), le lecteur de carte SIM (26) et les moyens de vérification (39) présentant chacun une connexion (18, 43) à un réseau commun (12) permettant de transmettre les données et le statut respectivement de la carte SIM (28) du lecteur de carte SIM aux moyens de vérification (39), **caractérisé en ce que** la communication entre la carte SIM et le centre d'analyse s'effectue par APDU, la carte SIM (28) se comportant toujours de façon passive et ne réagissant que sur initiative ou ordre du centre d'analyse (38).

2. Dispositif (10) de vérification de carte SIM (28) selon la revendication 1, les moyens de vérification (39) présentant un analyseur (41) analysant les données figurant sur la carte SIM (28).

3. Dispositif (10) de vérification de carte SIM (28) selon la revendication 1 ou 2, le réseau étant configuré sous forme de réseau de radiotéléphonie, notamment de radiotéléphonie mobile (12).

4. Dispositif (10) de vérification de carte SIM (28) selon l'une quelconque des revendications 1 à 3, les moyens de vérification (39) comprenant une unité centrale de traitement (40).

5. Dispositif (10) de vérification de carte SIM (28) selon l'une des revendications 1 à 4, les moyens de vérification (39) étant connectés à une banque de données (42) dans laquelle sont mémorisées des données concernant la carte SIM (28) à vérifier.

6. Dispositif (10) de vérification de carte SIM (28) selon l'une des revendications 1 à 4, le lecteur de carte SIM (26) étant intégré partiellement dans un terminal de radiotéléphonie mobile (16).

7. Dispositif (10) de vérification de carte SIM (28) selon l'une quelconque des revendications 1 à 6, des moyens de coder les données et le statut respectivement de la carte SIM (28) étant prévus.

8. Dispositif (10) de vérification de carte SIM (28) selon l'une quelconque des revendications 1 à 7, des moyens de détermination d'une autorisation étant prévus permettant seulement aux personnes autorisées de lire les données de statut figurant sur la carte SIM (28).
